# EUROPEAN PATENT APPLICATION

(11) **EP 4 386 939 A1**
(43) Date of publication of application: **19.06.2024**
(21) Application number: 22928291.8
(22) Date of filing: 15.11.2022
(51) Int. Cl.: H01M 10/613, H01M 10/6568

(54) **BOX BODY, BATTERY, ELECTRIC DEVICE, AND DEVICE FOR PREPARING BATTERY**

(30) Priority: 28.02.2022 CN 202220427432 U
(71) Applicant: Contemporary Amperex Technology Co., Limited, Ningde City, Fujian 352100 (CN)
(72) Inventor: WANG, Qing, Ningde City, Fujian 352100 (CN)
(74) Representative: Rowlands, Stuart Michael
(86) International application number: PCT/CN2022/132038
(87) International publication number: WO 2023/160030

(57) **Abstract**

Provided in the embodiments of the present application are a box body (10), a battery, an electric device, and a device for preparing a battery. The box body (10) comprises: a thermal management component (11), which is configured to adjust the temperature of a battery cell (20); and a protective plate (12), which is provided on the side of the thermal management component (11) that is away from the battery cell (20) and is configured to protect the thermal management component (11), wherein the thermal management component (11) is provided with first snap-fitting portions (110); the protective plate (12) is provided with second snap-fitting portions (120); and the first snap-fitting portions (110) are snap-fitted with the second snap-fitting portions (120), so as to connect the thermal management component (11) to the protective plate (12). According to the box body (10), the battery (100), the electric device, and the device (400) for preparing a battery in the embodiments of the present application, the safety of the battery can be enhanced.

## Description

### CROSS-REFERENCE TO RELATED APPLICATIONS

This application claims priority to Utility Model Application No. 202220427432.0, filed on February 28, 2022 and entitled "BOX, BATTERY, ELECTRIC APPARATUS, AND APPARATUS FOR MANUFACTURING BATTERY", which is incorporated herein by reference in its entirety.

### TECHNICAL FIELD

This application relates to the field of battery technologies, and more specifically, to a box, a battery, an electric apparatus, and an apparatus for manufacturing battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

In the development of battery technology, in addition to battery performance improvement, safety is another non-negligible issue. If the safety of a battery cannot be guaranteed, the battery cannot be used. Therefore, how safety performance of batteries is enhanced is an urgent technical problem that needs to be solved in battery technology.

### SUMMARY

In view of this, this application provides a box, a battery, an electric apparatus, and an apparatus for manufacturing battery, aiming to improve safety performance of batteries.

According to a first aspect, a box is provided for accommodating a battery cell, characterized by including: a thermal management component, where the thermal management component is configured to regulate temperature of the battery cell; and a protective plate, disposed at a side of the thermal management component away from the battery cell and configured to protect the thermal management component. The thermal management component is provided with a first snap-fitting portion, and the protective plate is provided with a second snap-fitting portion. The first snap-fitting portion and the second snap-fitting portion are snap-fitted to connect the thermal management component and the protective plate.

In this embodiment, the thermal management component is provided with the first snap-fitting portion, the protective plate is provided with the second snap-fitting portion, and the first snap-fitting portion and the second snap-fitting portion are snap-fitted, so that the thermal management component and the protective plate can be quickly fitted together, achieving stability and reliability, thereby improving overall mechanical structural performance of the box. Moreover, since the thermal management component and the protective plate can be fitted together, the assembly efficiency of the box can be improved. In addition, the snap fitting between the thermal management component and the protective plate can also prevent collision, thereby improving the safety performance of a battery.

In a possible embodiment, the thermal management component includes multiple groups of fluid pipelines, where each of the multiple groups of fluid pipelines is provided with a first snap-fitting portion; the protective plate is provided with a second snap-fitting portion corresponding to each group of fluid pipelines; and each group of fluid pipelines and the protective plate are snap-fitted via the first snap-fitting portion and the second snap-fitting portion.

In this embodiment, the thermal management component includes multiple groups of fluid pipelines, and each group of fluid pipelines and the protective plate can be snap-fitted via the first snap-fitting portion and the second snap-fitting portion, thereby further improving the overall mechanical structural performance of the box.

In a possible embodiment, the first snap-fitting portion and the second snap-fitting portion extend along the same direction as the fluid pipelines extend.

In a possible implementation, each group of fluid pipelines is provided with one pair of first snap-fitting portions respectively located at two sides of a corresponding group of fluid pipelines.

In this embodiment, with one pair of first snap-fitting portions disposed at two sides of each group of fluid pipelines, structural stability between each group of fluid pipelines and the protective plate can be improved.

In a possible embodiment, the thermal management component further includes two flow gathering pipes, where two ends of each group of fluid pipelines are respectively connected to the two flow gathering pipes, and the multiple groups of fluid pipelines are spaced apart along an extension direction of the flow gathering pipes.

In this embodiment, the flow gathering pipes can not only connect the multiple groups of fluid pipelines, but also allow for convenient management for a fluid flowing into or out of the fluid pipelines.

In a possible embodiment, one of the first snap-fitting portion and the second snap-fitting portion is a slot structure, and the other one of the first snap-fitting portion and the second snap-fitting portion is a snap structure, where the snap structure is inserted into the slot structure to implement snap fitting between the first snap-fitting portion and the second snap-fitting portion.

In this embodiment, the first snap-fitting portion and the second snap-fitting portion are snap-fitted via the snap structure and the slot structure, improving the reliability of the connection between the thermal management component and the protective plate.

In a possible embodiment, the first snap-fitting portion extends toward the protective plate from a first surface of the thermal management component, and the second snap-fitting portion extends toward the thermal management component from a second surface of the protective plate. The first surface and the second surface are opposite each other. The first snap-fitting portion and the second snap-fitting portion are snap-fitted between the first surface and the second surface to connect the thermal management component and the protective plate.

In a possible embodiment, the first snap-fitting portion is a slot structure. The slot structure includes a first slot wall and a second slot wall perpendicular to each other, and the first slot wall is perpendicular to the first surface. The second snap-fitting portion is a snap structure. The snap structure includes a snap body and a bent portion connected to each other, and the snap body is perpendicular to the second surface. The bent portion abuts against the second slot wall and is limited between the first slot wall and the snap body.

In this embodiment, the first snap-fitting portion is a slot structure, the second snap-fitting portion is a snap structure, and the bent portion of the snap structure abuts against the second slot wall of the slot structure and is limited between the first slot wall of the slot structure and the snap body of the snap structure. Therefore, when the protective plate is a bottom protective plate, structural stiffness of the box in a height direction can be enhanced, and a spatial size in the height direction is also increased to provide a buffer space, thereby improving a collision prevention effect, and also achieving adaptability to various processing implementation manners.

In a possible embodiment, the first snap-fitting portion is a slot structure, and the second snap-fitting portion is a snap structure, where an opening of the slot structure faces the second surface, and in a cross section along an extension direction of the slot structure, size of the opening of the slot structure is smaller than a maximum size of the slot structure and a maximum size of the snap structure, such that the snap structure is able to be inserted into the slot structure and able to limit movement of the protective plate along a direction perpendicular to the first surface with respect to the thermal management component.

In this embodiment, the first snap-fitting portion is a slot structure, the second snap-fitting portion is a snap structure, and in the cross section along the extension direction of the slot structure, the size of the opening of the slot structure is smaller than the maximum size of the slot structure and the maximum size of the snap structure, such that the snap structure is able to be inserted into the slot structure and able to limit movement of the protective plate along a direction perpendicular to the first surface with respect to the thermal management component. Therefore, when the protective plate is a bottom protective plate, structural stiffness of the box in a height direction can be enhanced, and a spatial size in the height direction is also increased to provide a buffer space, thereby improving a collision prevention effect.

In a possible embodiment, the cross section of the slot structure along the extension direction of the slot structure is in a first arc shape, and distance between two end points of the first arc shape is less than diameter of the arc shape. A cross section of the snap structure along the first direction is in a second arc shape, and diameter of the second arc shape is less than the diameter of the first arc shape and greater than the distance between the two end points of the first arc shape.

In a possible embodiment, the first snap-fitting portion extends along a direction parallel to the first surface of the thermal management component from a side surface of the thermal management component, and the second snap-fitting portion extends from the second surface of the protective plate along a direction leaving the second surface and is snap-fitted with the first snap-fitting portion on the side surface of the thermal management component, so as to connect the thermal management component and the protective plate, where the first surface and the second surface are opposite each other.

In this embodiment, the first snap-fitting portion is a snap structure, the second snap-fitting portion is a slot structure, and the second snap-fitting portion is snap-fitted with the first snap-fitting portion on the side surface of the thermal management component. Therefore, when the protective plate is a bottom protective plate, space of the box in a height direction can be saved, thereby improving space utilization.

In a possible embodiment, the first snap-fitting portion is a snap structure, and the second snap-fitting portion is a slot structure. The snap structure includes a third surface and a fourth surface parallel to each other. The third surface is farther away from the second surface than the fourth surface, the fourth surface is an extension surface of the first surface, and in a direction perpendicular to the first surface, size of the snap structure is smaller than size of the thermal management component. The slot structure includes a third slot wall and a fourth slot wall perpendicular to each other, the third slot wall is perpendicular to the second surface, and the fourth slot wall abuts against the third surface and is limited between the third slot wall and the side surface of the thermal management component.

In a possible embodiment, the box further includes insulating foam sandwiched between the protective plate and the thermal management component.

In this embodiment, the insulating foam can maintain temperature of the thermal management component, thereby better improving thermal management performance.

In a possible embodiment, the box further includes a frame perpendicular to the protective plate and disposed around the battery cell, where the frame is fixedly connected to the protective plate.

In this embodiment, the thermal management component and the protective plate are snap-fitted, and the protective plate and the frame are fixedly connected, so that the thermal management component can be limited in all directions, thereby improving the overall mechanical structural performance of the box.

In a possible embodiment, the box further includes a sealing structure disposed between the frame and the protective plate.

In this embodiment, the sealing structure disposed between the protective plate and the frame can improve airtightness of the box, thereby improving the safety of the battery.

In a possible embodiment, the sealing structure includes a sealing gasket and/or a sealing adhesive.

In a possible embodiment, the frame is fixedly connected to the protective plate through riveting of a flow drill screw, friction stir welding, or a bolt.

According to a second aspect, a battery is provided, including multiple battery cells and the box according to the first aspect or any one of the possible embodiments, where the multiple battery cells are accommodated in the box.

According to a third aspect, an electric apparatus is provided, including the battery according to the second aspect, where the battery is configured to provide electrical energy for the electric apparatus.

According to a fourth aspect, an apparatus for manufacturing battery is provided, including: a providing module, configured to provide a battery cell and provide a box for accommodating the battery cell. The box includes: a thermal management component, where the thermal management component is configured to regulate temperature of the battery cell; and a protective plate, disposed at a side of the thermal management component away from the battery cell and configured to protect the thermal management component. The thermal management component is provided with a first snap-fitting portion, and the protective plate is provided with a second snap-fitting portion. The first snap-fitting portion and the second snap-fitting portion are snap-fitted to connect the thermal management component and the protective plate.

### BRIEF DESCRIPTION OF DRAWINGS

FIG. 1 is a schematic structural diagram of a vehicle according to an embodiment of this application.
FIG. 2 is a schematic structural diagram of a battery according to an embodiment of this application.
FIG. 3 is a schematic exploded view of a box according to an embodiment of this application.
FIG. 4 is a schematic structural diagram of a thermal management component according to an embodiment of this application.
FIG. 5 is a schematic assembly diagram showing one snap fitting manner between a thermal management component and a protective plate according to an embodiment of this application.
FIG. 6 is a schematic structural diagram of the thermal management component in FIG. 5.
FIG. 7 is a schematic structural diagram of the protective plate in FIG. 5.
FIG. 8 is a schematic assembly diagram showing one snap fitting manner between a thermal management component and a protective plate according to an embodiment of this application.
FIG. 9 is a schematic structural diagram of the thermal management component in FIG. 8.
FIG. 10 is a schematic structural diagram of the protective plate in FIG. 8.
FIG. 11 is a schematic assembly diagram showing one snap fitting manner between a thermal management component and a protective plate according to an embodiment of this application.
FIG. 12 is a schematic structural diagram of the thermal management component in FIG. 11.
FIG. 13 is a schematic structural diagram of the protective plate in FIG. 11.
FIG. 14 is a schematic exploded view of a box according to an embodiment of this application.
FIG. 15 is a schematic exploded view of a box according to an embodiment of this application.
FIG. 16 is a schematic diagram of a connection between a frame and a protective plate in FIG. 15.
FIG. 17 is a schematic block diagram of a method for manufacturing battery according to an embodiment of this application.
FIG. 18 is a schematic block diagram of an apparatus for manufacturing battery according to an embodiment of this application.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. It will be apparent that the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular sequence or relative importance.

The orientation terms appearing in the following description all refer to directions shown in the figures, and do not limit the specific structure of this application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, "multiple" means more than two (inclusive). Similarly, "multiple groups" means more than two (inclusive) groups, and "multiple pieces" means more than two (inclusive) pieces.

In this application, the battery cell may be a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

At present, in a box of a battery integrated with a thermal management component, the thermal management component and a bottom protective plate are separately assembled, to be specific, the bottom protective plate is firstly assembled onto a frame of the box, then the thermal management component is placed on the bottom protective plate, and the thermal management component and the bottom protective plate are not fixed or fixed through adhesion, resulting in insufficient overall stiffness between the thermal management component and the bottom protective plate. As a result, when the bottom of an electric apparatus such as a vehicle is impacted, the insufficient stiffness between the thermal management component and the bottom protective plate may cause damage to the battery, thus affecting the safety of the battery.

In view of this, the embodiments of this application provide a technical solution, in which the thermal management component and the protective plate are fixed through snap fitting, improving the overall mechanical structural performance of the box. In addition, the snap fitting between the thermal management component and the protective plate can also prevent collision, thereby improving the safety performance of a battery.

The technical solutions described in the embodiments of this application are all applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, electric vehicles are used as an example for description in the following embodiments.

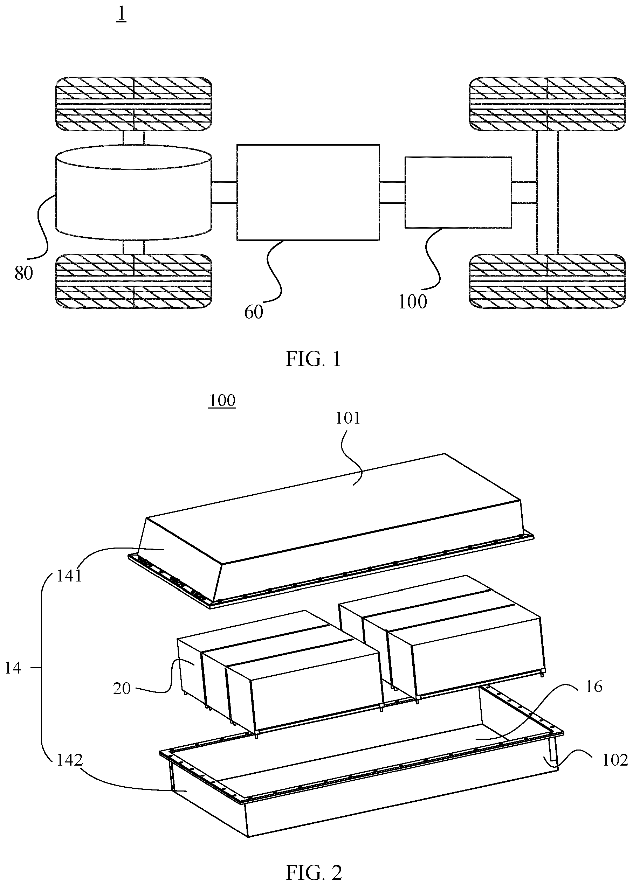

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 may be provided with a motor 80, a controller 60, and a battery 100 inside, where the controller 60 is configured to control the battery 100 to supply power to the motor 80. For example, the battery 100 may be disposed at the bottom, front, or rear of the vehicle 1. The battery 100 may be configured to supply power to the vehicle 1. For example, the battery 100 may be used as an operational power source for the vehicle 1 for use in a circuit system of the vehicle 1, for example, to satisfy power needs of start, navigation, and running of the vehicle 1. In another embodiment of this application, the battery 100 may be used not only as the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be referred to as a battery pack. Optionally, multiple battery cells may be connected in series, parallel, or series-parallel to form a battery module first, and then multiple battery modules are connected in series, parallel, or series-parallel to form a battery. In other words, the multiple battery cells may be directly combined into a battery, or may first be combined into battery modules that are then combined into a battery.

For example, FIG. 2 is a schematic structural diagram of a battery 100 according to an embodiment of this application. The battery 100 may include multiple battery cells 20. The battery 100 may further include a box (or a cover body) that has a hollow structure inside, and the multiple battery cells 20 are accommodated in the box. As shown in FIG. 2, the box may include two portions that are referred to herein as a first portion 101 and a second portion 102 respectively. The first portion 101 and the second portion 102 are snap-fitted together. Shapes of the first portion 101 and the second portion 102 may be determined based on a shape of the multiple battery cells 20 that are combined, and the first portion 101 and the second portion 102 each may have an opening. For example, the first portion 101 and the second portion 102 may each be a hollow cuboid and each have only one open surface. The opening of the first portion 101 and the opening of the second portion 102 are disposed opposite each other, and the first portion 101 and the second portion 102 are snap-fitted to form the box with a closed cavity. The multiple battery cells 20 are connected in parallel, series, or series-parallel, and then placed into the box formed by the first portion 101 and the second portion 102 that are snap-fitted.

Optionally, the first portion 101 and the second portion 102 may include two portions. For example, the second portion 102 is formed by a bottom protective plate 16 and a second sub-frame 142, while the first portion 101 is formed by a top cover plate (not shown in the figure) and a first sub-frame 141, where the first sub-frame 141 and the second sub-frame 142 jointly form a frame 14, that is, the first sub-frame 141 and the second sub-frame 142 may be integrally formed. In other words, the box of the battery 100 may alternatively be formed by the top cover plate (not shown in the figure), the frame 14, and the bottom protective plate 16 together. A specific constitution manner of the box is not limited in this embodiment of this application.

Optionally, the battery 100 may further include other structures. Details are not described herein.

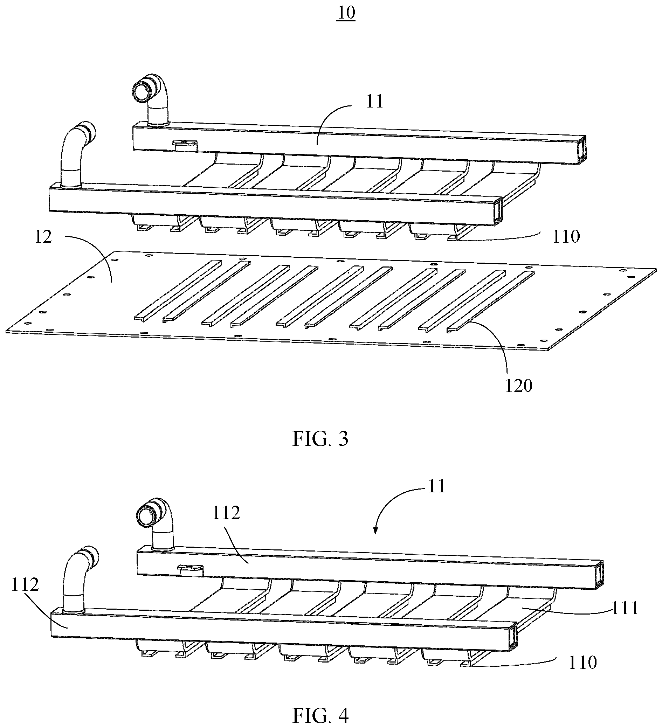

FIG. 3 is a schematic exploded view of a box 10 according to an embodiment of this application. The box 10 is configured to accommodate the battery cell 20. As shown in FIG. 3, the box 10 includes a thermal management component 11 and a protective plate 12. The thermal management component 11 is configured to regulate temperature of the battery cell 20. The protective plate 12 is disposed at a side of the thermal management component 11 away from the battery cell 20 and is configured to protect the thermal management component 11. The thermal management component 11 is provided with a first snap-fitting portion 110, and the protective plate 12 is provided with a second snap-fitting portion 120. The first snap-fitting portion 110 and the second snap-fitting portion 120 are snap-fitted to connect the thermal management component 11 and the protective plate 12.

It should be understood that the protective plate 12 shown in FIG. 3 may be the bottom protective plate 16 in FIG. 2, in other words, the protective plate 12 may be disposed below the battery cell 20. Optionally, the protective plate 12 may alternatively be disposed at either side of the battery cell 20. The thermal management component 11 is parallel to the protective plate 12 and is disposed between the protective plate 12 and the battery cell 20. In other words, the thermal management component 11 and the protective plate 12 are fixedly connected through snap fitting to jointly form any wall of the box 10.

Typically, the thermal management component 11 is configured to accommodate a fluid to regulate temperature of the battery cell 20. The fluid herein may be liquid or gas. Regulating temperature means heating or cooling the battery cell 20. In a case of cooling or lowering the temperature of the battery cell 20, the thermal management component 11 is configured to accommodate a cooling fluid to lower the temperature of the battery cell 20. In this case, the thermal management component 11 may also be referred to as a cooling component, a cooling system, a cooling plate, or the like. The fluid accommodated therein may also be referred to as a cooling medium or cooling fluid, and more specifically, a cooling liquid or cooling gas. In addition, the thermal management component 11 may alternatively be configured to heat and raise the temperature of the battery cell 20. This is not limited in this embodiment of this application. Optionally, the fluid may flow circularly to achieve a better temperature regulation effect. Optionally, the fluid may be water, a solution mixture of water and ethylene glycol, air, or the like.

Therefore, in the box 10 provided in this embodiment of this application, the thermal management component 11 is provided with the first snap-fitting portion 110, the protective plate 12 is provided with the second snap-fitting portion 120, and the first snap-fitting portion 110 and the second snap-fitting portion 120 are snap-fitted, so that the thermal management component 11 and the protective plate 12 can be quickly fitted together, achieving stability and reliability, thereby improving the overall mechanical structural performance of the box 10. Moreover, since the thermal management component 11 and the protective plate 12 can be fitted together, the assembly efficiency of the box 10 can be improved. In addition, the snap fitting between the thermal management component 11 and the protective plate 12 can also prevent collision, thereby improving the safety performance of the battery.

Optionally, the thermal management component 11 may be provided with a fluid pipeline for accommodating a fluid. For example, the thermal management component 11 is formed by multiple first metal plates provided with grooves and a flat second metal plate, where the second metal plate covers multiple grooves on the first metal plates to form the fluid pipeline with multiple cavities.

Optionally, as shown in FIG. 4, the thermal management component 11 includes multiple groups of fluid pipelines 111, where each of the multiple groups of fluid pipelines 111 is provided with a first snap-fitting portion 110; the protective plate 12 is provided with a second snap-fitting portion 120 corresponding to each group of fluid pipelines 111; and each group of fluid pipelines 111 and the protective plate 12 are snap-fitted via the first snap-fitting portion 110 and the second snap-fitting portion 120.

In this embodiment, the thermal management component 11 includes multiple groups of fluid pipelines 111, and each group of fluid pipelines 111 and the protective plate 12 can be snap-fitted via the first snap-fitting portion 110 and the second snap-fitting portion 120, thereby further improving the overall mechanical structural performance of the box 10.

Optionally, as shown in FIG. 4, the thermal management component 11 further includes two flow gathering pipes 112, where two ends of each group of fluid pipelines 111 are respectively connected to the two flow gathering pipes 112, and the multiple groups of fluid pipelines 111 are spaced apart along an extension direction of the flow gathering pipes 112.

In this embodiment, the flow gathering pipes 112 can not only connect the multiple groups of fluid pipelines 111, but also allow for convenient management for a fluid flowing into or out of the fluid pipelines 111.

Optionally, as shown in FIG. 4, the first snap-fitting portion 110 and the second snap-fitting portion 120 extend along the same direction as the fluid pipelines 111 extend.

Optionally, as shown in FIG. 4, each group of fluid pipelines 111 is provided with one pair of first snap-fitting portions 110 respectively located at two sides of a corresponding group of fluid pipelines 111.

In this embodiment, with one pair of first snap-fitting portions 110 disposed at two sides of each group of fluid pipelines 111, structural stability between each group of fluid pipelines 111 and the protective plate 12 can be improved.

Optionally, in this embodiment of this application, one of the first snap-fitting portion 110 and the second snap-fitting portion 120 is a slot structure, and the other one of the first snap-fitting portion 110 and the second snap-fitting portion 120 is a snap structure, where the snap structure is inserted into the slot structure to implement snap fitting between the first snap-fitting portion 110 and the second snap-fitting portion 120.

In this embodiment, the first snap-fitting portion 110 and the second snap-fitting portion 120 are snap-fitted via the snap structure and the slot structure, improving the reliability of the connection between the thermal management component 11 and the protective plate 12.

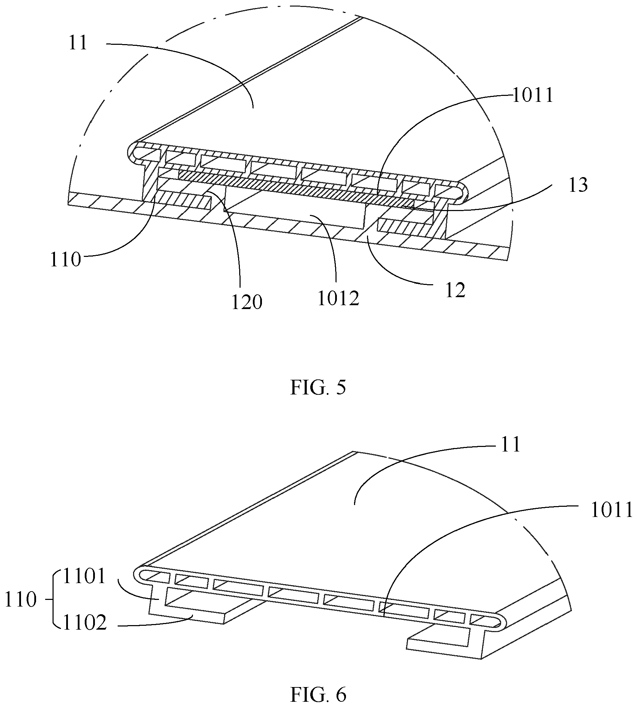

In an embodiment, the first snap-fitting portion 110 and the second snap-fitting portion 120 may be snap-fitted between the thermal management component 11 and the protective plate 12, so as to connect the thermal management component 11 and the protective plate 12. Optionally, as shown in FIG. 5 to FIG. 10, the first snap-fitting portion 110 extends toward the protective plate 12 from a first surface 1011 of the thermal management component 11, and the second snap-fitting portion 120 extends toward the thermal management component 11 from a second surface 1012 of the protective plate 12, where the first surface 1011 and the second surface 1012 are opposite each other, and the first snap-fitting portion 110 and the second snap-fitting portion 120 are snap-fitted between the first surface 1011 and the second surface 1012 to connect the thermal management component 11 and the protective plate 12.

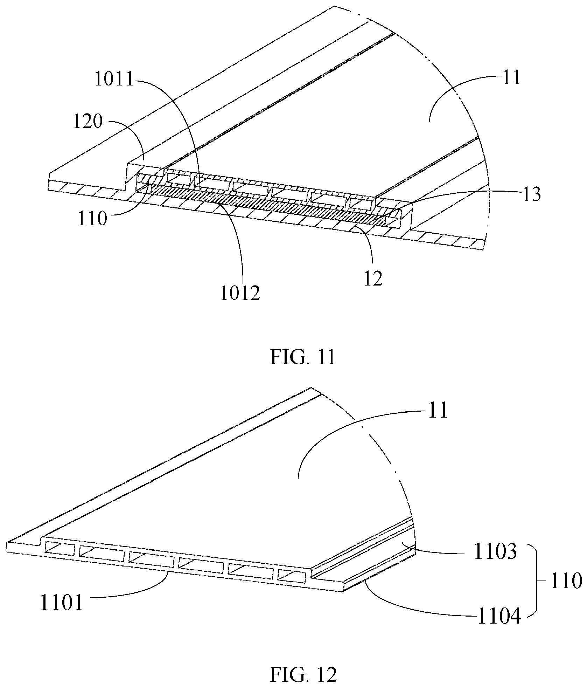

In another embodiment, the first snap-fitting portion 110 and the second snap-fitting portion 120 may alternatively be snap-fitted on a side surface of the thermal management component 11, so as to connect the thermal management component 11 and the protective plate 12. Optionally, as shown in FIG. 11 to FIG. 13, the first snap-fitting portion 110 extends along a direction parallel to the first surface 1011 of the thermal management component 11 from a side surface of the thermal management component 11, and the second snap-fitting portion 120 extends from the second surface 1012 of the protective plate 12 along a direction leaving the second surface 1012 and is snap-fitted with the first snap-fitting portion 110 on the side surface of the thermal management component 11, so as to connect the thermal management component 11 and the protective plate 12, where the first surface 1011 and the second surface 1012 are opposite each other.

An example in which one of the first snap-fitting portion 110 and the second snap-fitting portion 120 is a slot structure and the other one is a snap structure is used below for describing various snap fitting manners between the thermal management component 11 and the protective plate 12 in this embodiment of this application with reference to FIG. 5 to FIG. 13.

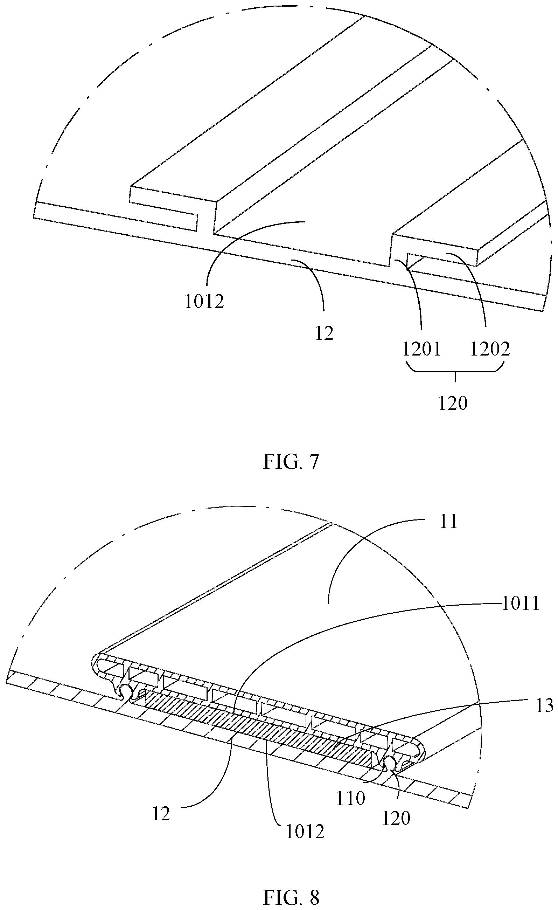

FIG. 5 is a schematic assembly diagram showing one snap fitting manner between the thermal management component 11 and the protective plate 12 according to this embodiment of this application. FIG. 6 is a schematic structural diagram of the thermal management component 11 in FIG. 5. FIG. 7 is a schematic structural diagram of the protective plate 12 in FIG. 5. As shown in FIG. 5 to FIG. 7, the first snap-fitting portion 110 is a slot structure. The slot structure includes a first slot wall 1101 and a second slot wall 1102 perpendicular to each other, and the first slot wall 1101 is perpendicular to the first surface 1011. The second snap-fitting portion 120 is a snap structure. The snap structure includes a snap body 1201 and a bent portion 1202 connected to each other, and the snap body 1201 is perpendicular to the second surface 1012. The bent portion 1202 abuts against the second slot wall 1102 and is limited between the first slot wall 1101 and the snap body 1201.

Optionally, in this embodiment of this application, the bent portion 1202 may alternatively be perpendicular to the snap body 1201. Specifically, the first slot wall 1101 and the second slot wall 1102 may form an L shape, the bent portion 1202 and the snap body 1201 may also form an L shape, and the first snap-fitting portion 110 and the second snap-fitting portion 120 may be reversely snap-fitted.

In other embodiments of this application, the first slot wall 1101 may not be perpendicular to the second slot wall 1102, and the bent portion 1202 may not be perpendicular to the snap body 1201 as well, as long as the first snap-fitting portion 110 and the second snap-fitting portion 120 can fit with each other between the thermal management component 11 and the protective plate 12 so as to be snap-fitted.

In this embodiment, the first snap-fitting portion 110 is a slot structure, the second snap-fitting portion 120 is a snap structure, and the bent portion 1202 of the snap structure abuts against the second slot wall 1102 of the slot structure and is limited between the first slot wall 1101 of the slot structure and the snap body 1201 of the snap structure. Therefore, when the protective plate 12 is the bottom protective plate 16 shown in FIG. 2, structural stiffness of the box in a height direction can be enhanced, and a spatial size in the height direction is also increased to provide a buffer space, thereby improving a collision prevention effect and also achieving adaptability to various processing implementation manners.

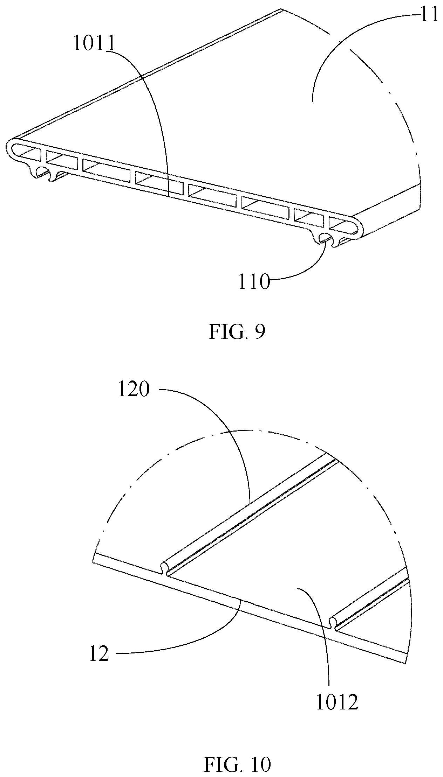

FIG. 8 is a schematic assembly diagram showing another snap fitting manner between the thermal management component 11 and the protective plate 12 according to this embodiment of this application. FIG. 9 is a schematic structural diagram of the thermal management component 11 in FIG. 8. FIG. 10 is a schematic structural diagram of the protective plate 12 in FIG. 8. As shown in FIG. 8 to FIG. 10, the first snap-fitting portion 110 is a slot structure, and the second snap-fitting portion 120 is a snap structure. An opening of the slot structure faces the second surface 1012, and in a cross section along a first direction, size of the opening of the slot structure is smaller than a maximum size of the slot structure and a maximum size of the snap structure, such that the snap structure is able to be inserted into the slot structure and able to limit movement of the protective plate 12 along a direction perpendicular to the first surface 1011 with respect to the thermal management component 11. The first direction is an extension direction of the slot structure.

In this embodiment, the first snap-fitting portion 110 is a slot structure, the second snap-fitting portion 120 is a snap structure, and in the cross section along the extension direction of the slot structure, the size of the opening of the slot structure is smaller than the maximum size of the slot structure and the maximum size of the snap structure, such that the snap structure is able to be inserted into the slot structure and able to limit movement of the protective plate 12 along a direction perpendicular to the first surface 1011 with respect to the thermal management component 11. Therefore, when the protective plate 12 is the bottom protective plate 16 shown in FIG. 2, structural stiffness of the box 10 in a height direction can be enhanced, and a spatial size in the height direction is also increased to provide a buffer space, thereby improving the collision prevention effect.

Optionally, in this embodiment of this application, the cross section of the slot structure along the extension direction of the slot structure is in a first arc shape, and distance between two end points of the first arc shape is less than diameter of the arc shape. A cross section of the snap structure along the first direction is in a second arc shape, and diameter of the second arc shape is less than the diameter of the first arc shape and greater than the distance between the two end points of the first arc shape.

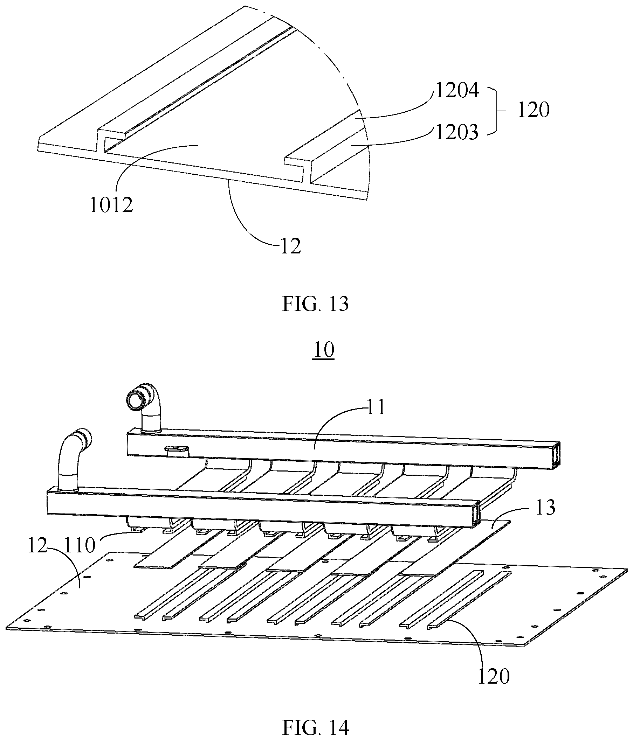

FIG. 11 is a schematic assembly diagram showing another snap fitting manner between the thermal management component 11 and the protective plate 12 according to this embodiment of this application. FIG. 12 is a schematic structural diagram of the thermal management component 11 in FIG. 11. FIG. 13 is a schematic structural diagram of the protective plate 12 in FIG. 11. As shown in FIG. 11 to FIG. 13, the first snap-fitting portion 110 is a snap structure, and the second snap-fitting portion 120 is a slot structure. The snap structure includes a third surface 1103 and a fourth surface 1104 parallel to each other, where the third surface 1103 is farther away from the second surface 1012 than the fourth surface (1104), and the fourth surface 1104 is an extension surface of the first surface 1011. In a direction perpendicular to the first surface 1011, size of the snap structure is smaller than size of the thermal management component 11. The slot structure includes a third slot wall 1203 and a fourth slot wall 1204 perpendicular to each other, where the third slot wall 1203 is perpendicular to the second surface 1012, and the fourth slot wall 1204 abuts against the third surface 1103 and is limited between the third slot wall 1203 and the side surface of the thermal management component (11).

In this embodiment, the first snap-fitting portion 110 is a snap structure, the second snap-fitting portion 120 is a slot structure, and the second snap-fitting portion 120 is snap-fitted with the first snap-fitting portion 110 on the side surface of the thermal management component 11. Therefore, when the protective plate 12 is the bottom protective plate 16 shown in FIG. 2, space of the box in the height direction can be saved, thereby improving space utilization.

It should be noted that although the foregoing three snap fitting manners are shown in this embodiment of this application, persons skilled in the art understand that this embodiment of this application is not limited to the three snap fitting manners. All manners fall within the protection scope of this application, as long as the thermal management component 11 and the protective plate 12 are snap-fitted.

In addition, the foregoing three snap fitting manners may be used alone or used together. This is not limited in this embodiment of this application.

FIG. 14 is another schematic exploded view of a box 10 according to an embodiment of this application. As shown in FIG. 14, the box 10 further includes insulating foam 13. The insulating foam 13 is sandwiched between the thermal management component 11 and the protective plate 12.

In this embodiment, the insulating foam 13 can maintain temperature of the thermal management component 11, thereby better improving thermal management performance.

Optionally, in a snap fitting manner shown in FIG. 5, the insulating foam 13 is disposed between the bent portion 1202 and the first surface 1011 of the thermal management component 11, and the insulating foam 13 may be adhered to the first surface 1011 through a fixing adhesive. Alternatively, the insulating foam 13 is fixed between the protective plate 12 and the thermal management component 11 by virtue of a frictional force between the bent portion 1202 and the first surface 1011.

Optionally, in a snap fitting manner shown in FIG. 8, the insulating foam 13 is disposed between two surfaces, disposed opposite each other, of the thermal management component 11 and the protective plate 12. The insulating foam 13 may be adhered to the first surface 1011 of the thermal management component 11 or the second surface 1012 of the protective plate 12 through a fixing adhesive. Alternatively, the insulating foam 13 is fixed between the thermal management component 11 and the protective plate 12 by virtue of a frictional force between the first surface 1011 of the thermal management component 11 and the second surface 1012 of the protective plate 12.

Optionally, in a snap fitting manner shown in FIG. 11, the insulating foam 13 is disposed between two surfaces, disposed opposite each other, of the thermal management component 11 and the protective plate 12. The insulating foam 13 may be adhered to the first surface 1011 of the thermal management component 11 or the second surface 1012 of the protective plate 12 through a fixing adhesive. Alternatively, the insulating foam 13 is fixed between the thermal management component 11 and the protective plate 12 by virtue of a frictional force between the first surface 1011 of the thermal management component 11 and the second surface 1012 of the protective plate 12.

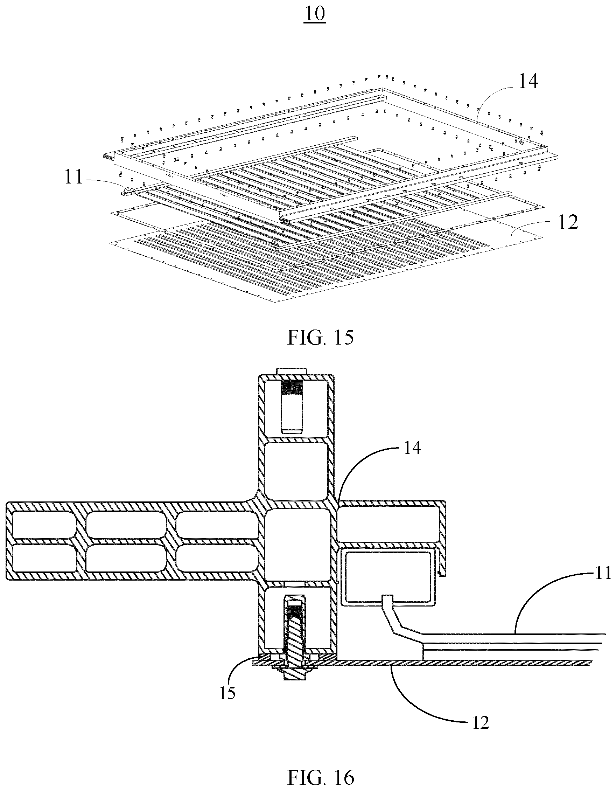

Optionally, as shown in FIG. 15, the box 10 may further include a frame 14 perpendicular to the protective plate 12 and disposed around the battery cell 20, where the frame 14 is fixedly connected to the protective plate 12.

In this embodiment, the thermal management component 11 and the protective plate 12 are snap-fitted, and the protective plate 12 and the frame 14 are fixedly connected, such that the thermal management component 11 can be limited in all directions, thereby improving the overall mechanical structural performance of the box 10.

FIG. 16 is a schematic enlarged view of a joint between the frame 14 and the protective plate 12. As shown in FIG. 16, the box 10 further includes a sealing structure 15, where the sealing structure 15 is disposed between the frame 14 and the protective plate 12. Specifically, the sealing structure 15 is disposed between the frame 14 and the protective plate 12 and at the joint between the frame 14 and the protective plate 12.

In this embodiment, the sealing structure 15 disposed between the protective plate 12 and the frame 14 can improve airtightness of the box 10, thereby improving the safety of the battery.

Optionally, in this embodiment of this application, the sealing structure 15 includes a sealing adhesive and/or a sealing gasket.

Optionally, in this embodiment of this application, the frame 14 and the protective plate 12 are fixedly connected through riveting of a flow drill screw (flow drill screw, FDS), friction stir welding (friction stir welding, FSW), or a bolt.

Optionally, an embodiment of this application further provides a battery 100. The battery 100 includes a battery cell 20 and a box 10, where the box 10 is configured to accommodate the battery cell 20.

Optionally, the box 10 may be the box 10 according to any one of the embodiments described above. For the structure of the battery cell 20, reference may be made to the structure of the battery cell 20 shown in FIG. 3. For brevity, details are not described herein again.

An embodiment of this application further provides an electric apparatus, where the electric apparatus may include the battery 100 in the foregoing embodiments, and the battery 100 is configured to provide electrical energy for the electric apparatus.

Optionally, the electric apparatus may be a vehicle 1, a ship, or a spacecraft.

The foregoing describes the battery and the electric apparatus in the embodiments of this application, and the following describes a method and an apparatus for manufacturing battery in the embodiments of this application. For content that is not described in detail, reference is made to the foregoing embodiments.

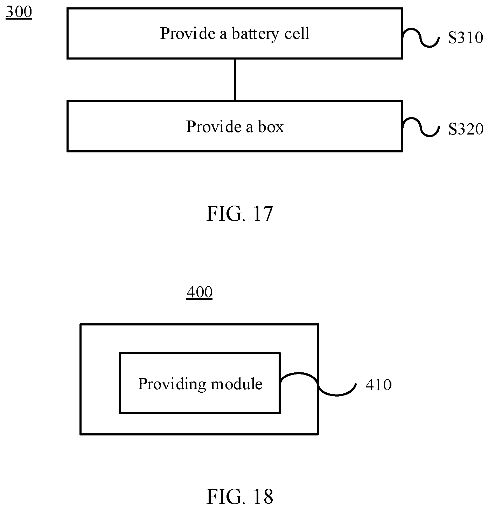

FIG. 17 is a schematic flowchart of a method 300 for manufacturing battery according to an embodiment of this application. The battery may be the battery 100 provided in the foregoing embodiments. As shown in FIG. 17, the method 300 may include the following steps.

S310. Provide a battery cell 20.

S320. Provide a box 10 for accommodating the battery cell 20.

The box 10 includes: a thermal management component 11, where the thermal management component 11 is configured to regulate temperature of the battery cell 20; and a protective plate 12, disposed at a side of the thermal management component 11 away from the battery cell 20 and configured to protect the thermal management component 11.

The thermal management component 11 is provided with a first snap-fitting portion 110, and the protective plate 12 is provided with a second snap-fitting portion 120. The first snap-fitting portion 110 and the second snap-fitting portion 120 are snap-fitted to connect the thermal management component 11 and the protective plate 12.

FIG. 18 is a schematic block diagram of an apparatus 400 for manufacturing battery according to an embodiment of this application. The battery may be the battery 100 provided in the foregoing embodiments. As shown in FIG. 18, the apparatus 400 for manufacturing battery may include a providing module 410.

The providing module 410 is configured to provide a battery cell 20 and provide a box 10 for accommodating the battery cell 20. The box 10 includes: a thermal management component 11, where the thermal management component 11 is configured to regulate temperature of the battery cell 20; and a protective plate 12, disposed at a side of the thermal management component 11 away from the battery cell 20 and configured to protect the thermal management component 11. The thermal management component 11 is provided with a first snap-fitting portion 110, and the protective plate 12 is provided with a second snap-fitting portion 120. The first snap-fitting portion 110 and the second snap-fitting portion 120 are snap-fitted to connect the thermal management component 11 and the protective plate 12.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A box (10) for accommodating a battery cell (20), **characterized by** comprising:
a thermal management component (11), wherein the thermal management component (11) is configured to regulate temperature of the battery cell (20); and
a protective plate (12), disposed at a side of the thermal management component (11) away from the battery cell (20) and configured to protect the thermal management component (11);
wherein the thermal management component (11) is provided with a first snap-fitting portion (110); the protective plate (12) is provided with a second snap-fitting portion (120); and the first snap-fitting portion (110) and the second snap-fitting portion (120) are snap-fitted to connect the thermal management component (11) and the protective plate (12).

2. The box (10) according to claim 1, **characterized in that** the thermal management component (11) comprises multiple groups of fluid pipelines (111), wherein each of the multiple groups of fluid pipelines (111) is provided with a first snap-fitting portion (110); the protective plate (12) is provided with a second snap-fitting portion (120) corresponding to each group of fluid pipelines (111); and each group of fluid pipelines (111) and the protective plate (12) are snap-fitted via the first snap-fitting portion (110) and the second snap-fitting portion (120).

3. The box (10) according to claim 2, **characterized in that** the first snap-fitting portion (110) and the second snap-fitting portion (120) extend along the same direction as the fluid pipelines (111) extend.

4. The box (10) according to claim 2 or 3, **characterized in that** each group of fluid pipelines (111) is provided with one pair of first snap-fitting portions (110) respectively located at two sides of a corresponding group of fluid pipelines (111).

5. The box (10) according to any one of claims 2 to 4, **characterized in that** the thermal management component (11) further comprises two flow gathering pipes (112), wherein two ends of each group of fluid pipelines (111) are respectively connected to the two flow gathering pipes (112), and the multiple groups of fluid pipelines (111) are spaced apart along an extension direction of the flow gathering pipes (112).

6. The box (10) according to any one of claims 1 to 5, **characterized in that** one of the first snap-fitting portion (110) and the second snap-fitting portion (120) is a slot structure, and the other one of the first snap-fitting portion (110) and the second snap-fitting portion (120) is a snap structure, wherein the snap structure is inserted into the slot structure to implement snap fitting between the first snap-fitting portion (110) and the second snap-fitting portion (120).

7. The box (10) according to claim 6, **characterized in that** the first snap-fitting portion (110) extends toward the protective plate (12) from a first surface (1011) of the thermal management component (11), and the second snap-fitting portion (120) extends toward the thermal management component (11) from a second surface (1012) of the protective plate (12), wherein the first surface (1011) and the second surface (1012) are opposite each other, and the first snap-fitting portion (110) and the second snap-fitting portion (120) are snap-fitted between the first surface (1011) and the second surface (1012) to connect the thermal management component (11) and the protective plate (12).

8. The box (10) according to claim 7, **characterized in that** the first snap-fitting portion (110) is a slot structure, wherein the slot structure comprises a first slot wall (1101) and a second slot wall (1102) perpendicular to each other, and the first slot wall (1101) is perpendicular to the first surface (1011); the second snap-fitting portion (120) is a snap structure, the snap structure comprises a snap body (1201) and a bent portion (1202) connected to each other, and the snap body (1201) is perpendicular to the second surface (1012); and
the bent portion (1202) abuts against the second slot wall (1102) and is limited between the first slot wall (1101) and the snap body (1201).

9. The box according to claim 7, **characterized in that** the first snap-fitting portion (110) is a slot structure, and the second snap-fitting portion (120) is a snap structure, wherein an opening of the slot structure faces the second surface (1012), and in a cross section along an extension direction of the slot structure, size of the opening of the slot structure is smaller than a maximum size of the slot structure and a maximum size of the snap structure, such that the snap structure is able to be inserted into the slot structure and able to limit movement of the protective plate (12) along a direction perpendicular to the first surface (1011) with respect to the thermal management component (11).

10. The box according to claim 9, **characterized in that** the cross section of the slot structure along the extension direction of the slot structure is in a first arc shape, wherein distance between two end points of the first arc shape is less than diameter of the arc shape; a cross section of the snap structure along the first direction is in a second arc shape; and diameter of the second arc shape is less than the diameter of the first arc shape and greater than the distance between the two end points of the first arc shape.

11. The box (10) according to any one of claims 6 to 10, **characterized in that** the first snap-fitting portion (110) extends along a direction parallel to the first surface (1011) of the thermal management component (11) from a side surface of the thermal management component (11), and the second snap-fitting portion (120) extends from the second surface (1012) of the protective plate (12) along a direction leaving the second surface (1012) and is snap-fitted with the first snap-fitting portion (110) on the side surface of the thermal management component (11), so as to connect the thermal management component (11) and the protective plate (12), wherein the first surface (1011) and the second surface (1012) are opposite each other.

12. The box according to claim 11, **characterized in that** the first snap-fitting portion (110) is a snap structure, and the second snap-fitting portion (120) is a slot structure; wherein the snap structure comprises a third surface (1103) and a fourth surface (1104) parallel to each other; the third surface (1103) is farther away from the second surface (1012) than the fourth surface (1104); the fourth surface (1104) is an extension surface of the first surface (1011); in a direction perpendicular to the first surface (1011), size of the snap structure is smaller than size of the thermal management component (11); the slot structure comprises a third slot wall (1203) and a fourth slot wall (1204) perpendicular to each other; the third slot wall (1203) is perpendicular to the second surface (1012); and the fourth slot wall (1204) abuts against the third surface (1103) and is limited between the third slot wall (1203) and the side surface of the thermal management component (11).

13. The box (10) according to any one of claims 1 to 12, **characterized in that** the box (10) further comprises:
insulating foam (13), sandwiched between the protective plate (12) and the thermal management component (11).

14. The box (10) according to any one of claims 1 to 13, **characterized in that** the box (10) further comprises:
a frame (14), perpendicular to the protective plate (12) and disposed around the battery cell (20),
wherein the frame (14) is fixedly connected to the protective plate (12).

15. The box (10) according to claim 14, **characterized in that** the box (10) further comprises:
a sealing structure (15), disposed between the frame (14) and the protective plate (12).

16. The box (10) according to claim 15, **characterized in that** the sealing structure (15) comprises a sealing gasket and/or a sealing adhesive.

17. The box (10) according to any one of claims 14 to 16, **characterized in that** the frame (14) is fixedly connected to the protective plate (12) through riveting of a flow drill screw, friction stir welding, or a bolt.

18. A battery (100), **characterized by** comprising:
a battery cell (20); and
the box (10) according to any one of claims 1 to 17, wherein the box (10) is configured to accommodate the battery cell (20).

19. An electric apparatus, **characterized by** comprising the battery (100) according to claim 18, wherein the battery (100) is configured to provide electrical energy for the electric apparatus.

20. An apparatus for manufacturing battery, **characterized by** comprising:
a providing module (410) configured to:
provide a battery cell (20); and
provide a box (10) for accommodating the battery cell (20), wherein the box (10) comprises:
a thermal management component (11), wherein the thermal management component (11) is configured to regulate temperature of the battery cell (20); and
a protective plate (12), disposed at a side of the thermal management component (11) away from the battery cell (20) and configured to protect the thermal management component (11);
wherein the thermal management component (11) is provided with a first snap-fitting portion (110); the protective plate (12) is provided with a second snap-fitting portion (120); and the first snap-fitting portion (110) and the second snap-fitting portion (120) are snap-fitted to connect the thermal management component (11) and the protective plate (12).
